# EUROPÄISCHE PATENTSCHRIFT

(11) **EP 0 941 774 B1**
(45) Veröffentlichungstag und Bekanntmachung des Hinweises auf die Patenterteilung: **28.03.2007**
(21) Anmeldenummer: 99101264.2
(22) Anmeldetag: 23.01.1999
(51) Int. Cl.: B06B 1/02, B32B 3/12

(54) **Vorrichtung zum Schweissen mit Ultraschall**
Apparatus for ultrasonic welding
Dispositif pour soudage par ultrasons

(30) Priorität: 11.03.1998 DE 19810509
(43) Veröffentlichungstag der Anmeldung: 15.09.1999
(73) Patentinhaber: Fraunhofer-Gesellschaft zur Förderung der angewandten Forschung e.V., 80686 München (DE)
(72) Erfinder: Dobmann, Gerd, 66125 Dudweiler (DE); Paul, Michael, 66538 Neunkirchen (DE); Fassbender, Silivia, 65191 Wiesbaden (DE); Eifler, Dietmar, 76764 Rheinzabern (DE)
(74) Vertreter: RACKETTE Partnerschaft Patentanwälte

(56) Entgegenhaltungen:
- EP-A- 0 572 059
- EP-A- 0 786 323
- US-A- 5 199 630
- DATABASE WPI Section EI, Week 198610 Derwent Publications Ltd., London, GB; Class S03, AN 1986-067533 XP002187006 & SU 1 173 306 A (BUILD METAL CONS RE), 15. August 1985 (1985-08-15)

## Beschreibung

Die Erfindung betrifft eine Vorrichtung zum Schweißen mit Ultraschall mit einer Fügeeinrichtung, die über einen Ultraschallgenerator und eine an den Ultraschallgenerator angeschlossene Sonotrode verfügt, mit der unter Einwirkung einer durch einen Kraftkoppler erzeugte Anpreßkraft zum Herbeiführen eines unmittelbaren Stoffschlusses zwischen zu verbindenden Teilen eines Schweißgutes in wenigstens einer Fügeschicht Ultraschallwellen mit einstellbaren Schweißparametern in eines der Teile einkoppelbar sind, mit einem Meßdatenspeicher, mit dem wenigstens eine Kenngröße zur Einstellung der Schweißparameter erfaßbar ist, und mit einer an den Meßdatenspeicher angeschlossenen Auswerteeinheit sowie einer Stelleinheit, mit denen in Abhängigkeit von wenigstens einer Kenngröße Schweißparameter einstellbar sind.

Eine derartige Vorrichtung ist aus DE 44 00 210 A1 bekannt. Bei der vorbekannten Vorrichtung ist eine Fügeeinrichtung mit einem Ultraschallgenerator und einer an den Ultraschallgenerator angeschlossenen Sonotrode ausgebildet, wobei mit der Sonotrode unter Einwirkung einer durch einen Kraftkoppler erzeugten Anpreßkraft zum Herbeiführen eines unmittelbaren Stoffschlusses zwischen zu verbindenden Teilen eines Schweißgutes in wenigstens einer Fügeschicht Ultraschallwellen mit einstellbaren Schweißparametern in eines der Teile einkoppelbar sind. Weiterhin sind ein Meßdatenspeicher, mit dem wenigstens eine Kenngröße zur Einstellung der Schweißparameter erfaßbar ist, eine an den Meßdatenspeicher angeschlossene Auswerteeinheit sowie eine Stelleinheit vorgesehen, mit denen in Abhängigkeit von wenigstens einer Kenngröße Schweißparameter einstellbar sind. Bei der vorbekannten Vorrichtung sind als Kenngrößen der Phasenwinkel, der Strom, die Spannung und/oder die Schein- oder Wirkleistung am Hochfrequenzausgang des Ultraschallgenerators vorgesehen. Diese Kenngrößen werden miteinander digital verknüpft, um die Frequenz des Ultraschallgenerators auf einen im Hinblick auf qualitativ hochwertige Schweißergebnisse gewünschte Resonanzfrequenz der gesamten mechanischen Anordnung einzustellen. Nachteilig bei dieser Vorrichtung kann sein, daß die Regelung unter Umständen unempfindlich ist, da die Resonanzfrequenz wesentlich von der Dicke der zu verschweißenden Teile sowie der Anpreßkraft abhängt.

Aus DE 42 06 584 C2 ist eine Vorrichtung zum Schweißen mit Ultraschall bekannt, bei der über eine Temperaturmeßeinheit Temperaturmeßwerte aufgenommen und einem Meßdatenspeicher sowie einer Auswerteeinheit eingespeist werden. In Abhängigkeit der Temperaturmeßwerte lassen sich Schweißparameter einstellen. Nachteilig bei dieser Vorrichtung sind insbesondere die Trägheit sowie relative Unempfindlichkeit.

Aus EP 0 572 059 A1 ist eine Vorrichtung zur Vermessung der Adhäsion zwischen zwei zu trennenden Teilen mittels Ultraschall bekannt. Eine als Mikrophon ausgebildete Ultraschalldetektionseinheit ist im Bereich eines Ultraschallgenerators und/oder der miteinander verbundenen Teile angeordnet. Das Ausgangssignal der Ultraschalldetektionseinheit wird auf eine an den Ultraschallgenerator angeschlossene Ansteuereinheit rückgeführt, um bei geringer werdender Adhäsion zwischen den Teilen die Amplitude des eingekoppelten Ultraschalls zur Vermeidung von Beschädigungen während der letzten Phase der Trennung zu reduzieren.

Eine weitere Vorrichtung ist aus dem Artikel "Ultraschallschweißen von Glas und Glaskeramik mit Metall" von M. Reuter und E. Roeder, erschienen in Schweißen und Schneiden 45 (1993), Heft 4, Seiten 198 bis 202, bekannt. Bei dieser Vorrichtung weist eine Fügeeinrichtung einen Ultraschallgenerator und eine an den Ultraschallgenerator angeschlossene Sonotrode auf. Mit der Sonotrode sind unter Einwirkung einer durch einen Kraftkoppler erzeugten Anpreßkraft Ultraschallwellen mit einstellbaren Schweißparametern in eines von beispielsweise zwei zu verbindenden Teilen eines Schweißgutes einkoppelbar. Durch die Wirkung der Ultraschallwellen werden die Teile des Schweißgutes unter Herbeiführen eines unmittelbaren Stoffschlusses miteinander verbunden. Dabei wird für jeden Schweißprozeß der günstigste Einstellbereich von Schweißparametern wie Anpreßkraft, Amplitude der Ultraschallwellen und Schweißzeit nach Vornahme einer Vielzahl von aufwendigen Schweißversuchen ermittelt. Mit dieser Vorrichtung werden zwar zufriedenstellende Schweißergebnisse erzielt, allerdings ist hierfür im Hinblick auf möglichst gute Resultate das Durchführen von aufwendigen Vorversuchen notwendig. Beim Rollnahtschweißen kommt es zu dynamischen Schwankungen der Schweißparameter, so daß in einer Schweißnaht immer wieder mit unzureichender Qualität geschweißte Bereiche vorliegen. In ähnlicher Weise ist wegen des schnellen Verschleiß der Sonotrode eine permanente Anpassung der Schweißparameter auch beim Ultraschallpunktschweißen erforderlich.

Bei der DE 43 25 856 A1 und der DE 43 25 878 A1 ist bei Verfahren zur Bewertung von über Widerstandsschweißungen, Laserschweißen oder Gasschweißen unter Beaufschlagen mit als Sondierwellen eingekoppelten Ultraschallwellen hergestellten Schweißverbindungen vorgesehen, über die Messung der Durchlässigkeit für Scherwellen oder der Schallgeschwindigkeit insbesondere von Druckwellen die Temperatur im Bereich einer Schweißlinse mit aufgeschmolzenem Material zu messen. Neben einer Bewertung von Schweißpunkten ist eine Regelung der Schweißparameter über den Vergleich mit einem Musterverlauf vorgesehen. Mit diesen Verfahren werden zwar gute Ergebnisse bei gleichartigen über Aufschmelzen zu verbindenden Materiallen erzielt, allerdings ist dadurch auch der Einsatzbereich insbesondere im Hinblick auf die Verwendung von sogenannten neuen Materialien wie Keramiken und organische Werkstoffe stark eingeschränkt.

Weitere Vorrichtungen sind aus US 5199630, EP 0786323 und SU 1173306 bekannt.

Der Erfindung liegt die Aufgabe zugrunde, eine Vorrichtung zum Schweißen mit Ultraschall der eingangs genannten Art so weiterzubilden, daß gute Schweißergebnisse bei ungleichartigen Materialien insbesondere auch ohne Aufschmelzung und ohne Vorversuche erzielt werden.

Diese Aufgabe wird bei einer Vorrichtung der eingangs genannten Art erfindungsgemäß dadurch gelöst, daß eine Ultraschalldetektionseinheit vorgesehen ist, mit der aufgrund von Wechselwirkung mit der oder jeder Fügeschicht modifizierte Anteile der eingekoppelten Ultraschallwellen detektierbar sind, daß der Meßdatenspeicher an die Ultraschalldetektionseinheit angeschlossen sowie zum Erfassen des zeitlichen Verlaufes des Anteils der detektierten Ultraschallwellen eingerichtet ist und daß mit der Auswerteeinheit aus dem Anteil der detektierten Ultraschallwellen wenigstens eine für den Schweißprozeß charakteristische Kenngröße bestimmbar ist.

Dadurch, daß eine Ultraschalldetektionseinheit vorgesehen ist, mit der Anteile von zum Durchführen des Schweißprozesses in das Schweißgut eingekoppelten Ultraschallwellen nach Wechselwirkung mit der Fügeschicht als Meßsignale erfaßbar sind und daß die detektierten Anteile der Ultraschallwellen mittels des Meßdatenspeichers und der Auswerteeinheit zum Gewinnen von für den Schweißprozeß charakteristischen Kenngrößen mit anschließender Ansteuerung der Stelleinheit weiterverarbeitet werden, lassen sich typische Schweißprozesse in Echtzeit geregelt ohne Vorversuche insbesondere auch bei nicht aufgeschmolzenen Schweißbereichen mit guten Ergebnissen durchführen.

Es ist zweckmäßig, daß ein Ultraschalldetektor der Ultraschalldetektionseinheit gegenüber der Sonotrode in ein das Schweißgut haltendes Auflagestück eingefügt ist. Weiterhin ist es vorteilhaft, daß die eingekoppelten Ultraschallwellen, die in Abhängigkeit der herangezogenen Kenngrößen Scherwellen und/oder Druckwellen sein können, eine feste Frequenz aufweisen. Dadurch ergibt sich ein verhältnismäßig geringer apparativer Aufwand.

Bei einer Weiterbildung weist die Auswerteeinheit einen Kalibrierdatenspeicher und eine Adaptationseinheit auf, wobei mit der Adaptationseinheit mittels Vergleiche von Meßdaten und Kalibrierdaten die Schweißparameter über die Stelleinheit und unmittelbar mit Überlagerung von Ausgangssignalen der Stelleinheit modifizierbar sind. Dadurch wird neben einer Regelung des Schweißprozesses eine Selbstadaptation erreicht.

Als Kenngrößen sind beispielsweise die gewichtete Summe aus der Amplitude der Grundwelle und wenigstens der Amplitude einer höheren Harmonischen, der Minimalwert dieser gewichteten Summe, der Transmissionskoeffizient, der Reflexionskoeffizient, ein aus der Leistung des Oberwellenanteiles im Verhältnis zu der Leistung des Grundwellenanteiles gebildeter Klirrfaktor oder die transmittierte Maximalamplitude vorgesehen.

Zusätzlich ist es zweckmäßig, über einen mit dem Schweißgut unmittelbar in Kontakt stehenden oder interferometrisch beziehungsweise kapazitiv arbeitenden, in einem Abstand dem Schweißgut angeordneten Körperschallaufnehmer oder einen Luftschallaufnehmer mit Einspeisen der entsprechenden Ausgangssignale in den Meßdatenspeicher weitere mittelbare Kenngrößen für die Regelung heranzuziehen.

Weitere zweckmäßige Ausgestaltungen und Vorteile der Erfindung sind Gegenstand der Unteransprüche sowie der nachfolgenden Beschreibung eines Ausführungsbeispieles mit Bezug auf die Figuren der Zeichnung. Es zeigen:
- Fig. 1: in einem Blockschaubild ein Ausführungsbeispiel der Erfindung mit einem auf einem Amboß aufgebrachten Schweißgut sowie einer ein einen Meßdatenspeicher sowie eine Stelleinheit angeschlossenen Auswerteeinheit und
- Fig. 2: in einem Blockschaltbild den Aufbau der Auswerteeinheit des Ausführungsbeispieles gemäß Fig. 1.

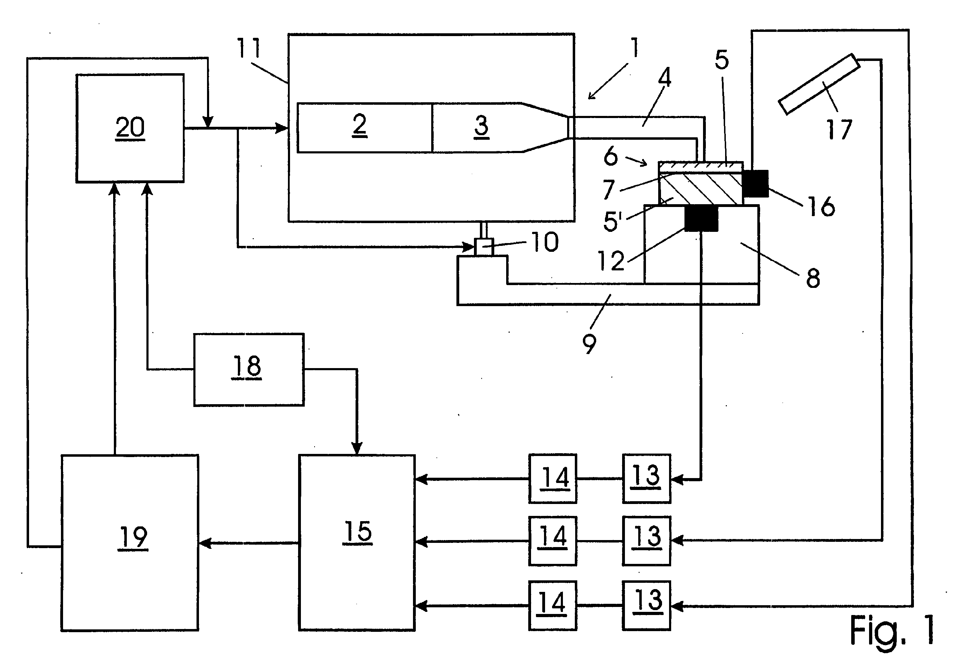

Fig. 1 zeigt in einem Blockschaubild ein Ausführungsbeispiel einer erfindungsgemäßen Vorrichtung, die über eine Fügeeinrichtung 1 verfügt. Die Fügeeinrichtung 1 weist einen Ultraschallgenerator 2 und einen an den Ultraschallgenerator 2 angeschlossenen Amplitudenverstärker 3 auf. Mit dem Ultraschallgenerator 2 sind Ultraschallwellen mit fester Frequenz sowie einstellbarer Ampltitude und Zeitdauer in den Amplitudenverstärker 3 einkoppelbar. Der Amplitudenverstärker 3 verjüngt sich an seinem dem Ultraschallgenerator 2 abgewandten Ende in Richtung einer Sonotrode 4 unter Modenumwandlung und Konzentration der Ultraschallenergie auf einen geringeren Querschnitt. Die Sonotrode 4 weist an ihrem dem Amplitudenverstärker 3 abgewandten Ende einen abgewinkelten Abschnitt auf, der in der Darstellung gemäß Fig. 1 auf einem ersten Verbindungsteil 5 eines Schweißgutes 6 aufliegt.

Ein mit dem ersten Verbindungsteil 5 zu verschweißendes zweites Verbindungsteil 5', das mit dem ersten Verbindungsteil 5 eine Fügeschicht 7 umschließt, ist auf einen Amboß 8 als Auflagestück aufgelegt, der an einem Träger 9 befestigt ist. An dem Träger 9 ist ein Kraftkoppler 10 vorgesehen, der den Träger 9 sowie einen den Ultraschallgenerator 2, den Amplitudenverstärker 3 sowie die Sonotrode 4 haltenden Rahmen 11 verbindet. Mit dem Kraftkoppler 10 ist die Sonotrode 4 mit einer einstellbarer Kraft auf das Schweißgut 6 aufdrückbar.

Die Vorrichtung gemäß Fig. 1 weist weiterhin einen Ultraschalldetektor 12 einer Ultraschalldetektionseinheit auf, der in dem Amboß 8 integriert und zur Detektion von nach Wechselwirkung mit der Fügeschicht 7 modifizierten Anteilen der über die Sonotrode 4 in das Schweißgut 6 eingeprägten Ultraschallwellen an das zweite Verbindungsteil 5' angekoppelt ist. Der Ultraschalldetektor 12 ist beispielsweise als kapazitiver, interferometrischer oder piezoelektrischer Aufnehmer ausgebildet.

Der Ultraschalldetektor 12 ist über einen Verstärker 13 sowie einen Analog/Digital-Wandler 14 der Ultraschalldetektionseinheit an einen Meßdatenspeicher 15 angeschlossen. Weiterhin sind an den Meßdatenspeicher 15 jeweils über einen Verstärker 13 und einen Analog/Digital-Wandler 14 ein in diesem Ausführungsbeispiel mit dem Schweißgut 6 in Kontakt stehender Körperschallaufnehmer 16 und in einem Abstand von dem Schweißgut 6 angeordneter Luftschallaufnehmer 17 angeschlossen. Mit dem Körperschallaufnehmer 16 sind niederfrequente mechanische Schwingungen als Körperschallamplituden des Schweißgutes 6 erfaßbar, während der Luftschallaufnehmer 17 zur Detektion von von dem Schweißgut 6 während des Schweißprozesses generierten ebenfalls niederfrequenten Schallwellen in der Luft als Luftschallamplituden dient.

In dem Meßdatenspeicher 15 sind während des Schweißprozesses der zeitliche Verlauf des Anteils der detektierten Ultraschallwellen sowie die Körperschallamplituden sowie die Luftschallamplituden abspeicherbar. Der Meßdatenspeicher 15 ist von einer Triggereinheit 18 mit Triggersignalen beaufschlagbar, die den Beginn eines Meßzyklus einleiten. Der Meßdatenspeicher 15 ist an eine Auswerteeinheit 19 angeschlossen, mit der in einer weiter unten näher erläuterten Weise die in dem Meßdatenspeicher 15 abgelegten Meßdaten weiterverarbeitbar sind.

Sowohl die Triggereinheit 18 als auch die Auswerteeinheit 19 sind an eine Stelleinheit 20 angeschlossen, mit der in Abhängigkeit der Ausgangssignale der Auswerteeinheit 19 die Dauer sowie die Amplitude der von dem Ultraschallgenerator 2 erzeugten Ultraschallwellen sowie die durch den Kraftkoppler 10 von der Sonotrode 4 auf das erste Verbindungsteil 5 ausgeübte Kraft und im Fall einer Rollnahtschweißung der Vorschub einstellbar ist. Weiterhin ist die Auswerteeinheit 19 mit einem weiteren Ausgang unter Umgehen der Stelleinheit 20 unmittelbar an den Ultraschallgenerator 2 sowie den Kraftkoppler 10 angeschlossen.

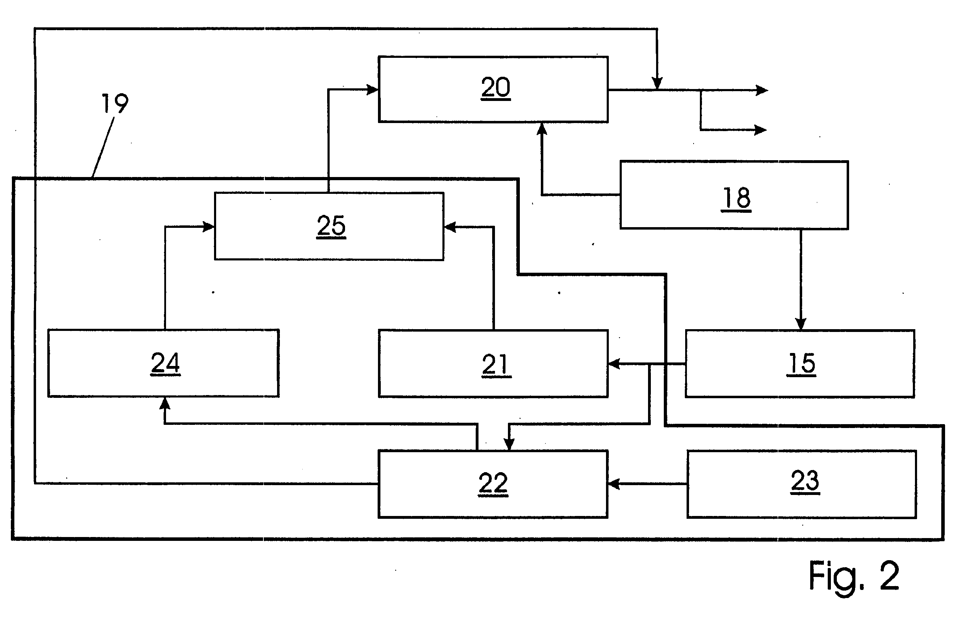

Fig. 2 zeigt in einem Blockschaltbild den prinzipiellen Aufbau der Auswerteeinheit 19 gemäß Fig. 1. Die Auswerteeinheit 19 weist einen Istwertespeicher 21 und ein Adaptationsglied 22 auf, die an den Meßdatenspeicher 15 angeschlossen sind. Das Adaptationsglied 22 ist an einen Kalibrierdatenspeicher 23 angeschlossen und übergibt Ausgangsdaten zum einen an einen Sollwertespeicher 24 und zum anderen unter Umgehung der Stelleinheit 20 unmittelbar an den Ultraschallgenerator 2 sowie den Kraftkoppler 10. Der Istwertespeicher 21 und der Sollwertespeicher 24 sind mit ihren Ausgängen an einen Komparator 25 angeschlossen, dessen Ausgangssignale der Stelleinheit 20 einspeisbar sind.

Mit der Auswerteeinheit 19 sind für den Schweißprozeß charakteristische Kenngrößen aus dem Anteil der detektierten Ultraschallwellen bestimmbar. Bevorzugte Kenngrößen sind die gewichtete Summe aus der Amplitude der Grundwelle und wenigstens der Amplitude einer höheren Harmonischen der detektierten Ultraschallwellen als sogenannte primäre Kenngrößen, als daraus abgeleitete sogenannte sekundäre Kenngrößen der Minimalwert der vorgenannten gewichteten Summe, der Transmissionskoeffizient und/oder bei entsprechender Anordnung des Ultraschalldetektors 12 der Reflexionskoeffizient der oder jeder Fügeschicht 7 als sogenannte primäre Kenngröße, ein aus der Leistung des Oberwellenanteiles im Verhältnis zu der Leistung des Grundwellenanteiles gebildeter Klirrfaktor als primäre Kenngröße oder die Maximalamplitude der Ultraschallwellen nach Wechselwirkung mit der Fügeschicht 7 als primäre Kenngröße.

Als weitere Kenngrößen sind die Zeitverläufe der Körperschallampltituden und/oder der Luftschallamplituden vorgesehen.

In Weiterbildungen sind weitere Kenngrößen durch die Frequenzanalyse der Zeitverläufe einer oder mehrerer der oben genannten Kenngrößen gebildet.

Die Kenngrößen sind als Istwerte dem Istwertespeicher 21 sowie dem Adaptationsglied 22 zugeführt. In dem Adaptationsglied 22 werden die während des Schweißprozesses erfaßten Kenngrößen mit in dem Kalibrierdatenspeicher 23 abgelegten Kalibriergrößen verglichen. Das Adaptationsglied 22 gibt zum einen aus den Kenngrößen und den Kalibriergrößen berechnete Sollwerte an den Sollwertespeicher 24 weiter, wobei aus dem Vergleich der Istwerte mit den Sollwerten durch den Komparator 25 der Abweichung von den Istwerten zu den Sollwerten zugeordnete Stellsignale an die Stelleinheit 20 ausgebbar sind. Von der Stelleinheit 20 generierte Nachführsignale werden Adaptationssignalen aus der Adaptationseinheit 20 vor Beaufschlagen des Ultraschallgenerators 2 und des Kraftkopplers 10 überlagert, so daß neben einer Regelung des Schweißprozesses auch ein von der Regelung beeinflußter Lernvorgang erfolgt.

## Patentansprüche

1. Vorrichtung zum Schweißen mit Ultraschall mit einer Fügeeinrichtung, die über einen Ultraschallgenerator (2) und eine an den Ultraschallgenerator (2) angeschlossene Sonotrode (4) verfügt, mit der in wenigstens einer Fügeschicht (7) zwischen zu verbindenden Teilen (5, 5') eines Schweißgutes (6) Ultraschallwellen mit einstellbaren Schweißparametern in eines der Teile (5, 5') einkoppelbar sind, mit einem Meßdatenspeicher, mit dem wenigstens eine Kenngröße zur Einstellung der Schweißparameter erfaßbar ist, und mit einer an den Meßdatenspeicher angeschlossenen Auswerteeinheit sowie einer Stelleinheit, mit denen in Abhängigkeit von wenigstens einer Kenngröße Schweißparameter einstellbar sind, wobei eine Ultraschalldetektionseinheit (12, 13, 14) vorgesehen ist, mit der aufgrund von Wechselwirkung mit der oder jeder Fügeschicht (7) modifizierte Anteile der eingekoppelten Ultraschallwellen detektierbar sind, und der Meßdatenspeicher (15) an die Ultraschalldetektionseinheit (12, 13, 14) angeschlossen sowie zum Erfassen des zeitlichen Verlaufes des Anteils der detektierten Ultraschallwellen eingerichtet ist und wobei mit der Auswerteeinheit (19) aus dem Anteil der detektierten Ultraschallwellen wenigstens eine für den Schweißprozeß charakteristische Kenngröße bestimmbar ist, **dadurch gekennzeichnet, daß** die Ultraschalldetektionseinheit (12, 13, 14) ausgebildet ist, um zusätzlich zur Grundwelle der eingekoppelten Ultraschallwellen höhere Harmonische der Grundwelle zu verarbeiten und daß aus einer gewichteten Summe aus der Amplitude der Grundwelle und wenigstens der Amplitude einer höheren Harmonischen der detektierten Ultraschallwellen eine primäre Kenngröße ableitbar ist.

2. Vorrichtung nach Anspruch 1, **dadurch gekennzeichnet, daß** eine sekundäre Kenngröße durch den Minimalwert der gewichteten Summe gebildet ist.

3. Vorrichtung nach Anspruch 1 oder 2, **dadurch gekennzeichnet, daß** ein Ultraschalldetektor (12) der Ultraschalldetektionseinheit gegenüber der Sonotrode (4) in ein das Schweißgut (6) haltendes Auflagestück (8) eingefügt ist.

4. Vorrichtung nach einem der Ansprüche 1 bis 3, **dadurch gekennzeichnet, daß** ein Kalibrierdatenspeicher (23) und eine Adaptationseinheit (22) vorgesehen sind, mit denen mittels Vergleich von Kenngrößen und Kalibrierdaten Schweißparameter beeinflußbar sind.

5. Vorrichtung nach einem der Ansprüche 1 bis 4, **dadurch gekennzeichnet, daß** eine primäre Kenngröße durch den Transmissionskoeffizienten der Fügeschicht (7) gebildet ist.

6. Vorrichtung nach einem der Ansprüche 1 bis 5, **dadurch gekennzeichnet, daß** eine primäre Kenngröße durch den Reflexionskoeffizienten der Fügeschicht (7) gebildet ist.

7. Vorrichtung nach einem der Ansprüche 1 bis 6, **dadurch gekennzeichnet, daß** eine primäre Kenngröße ein aus der Leistung des Oberwellenanteiles in Verhältnis zu der Leistung des Grundwellenanteiles der detektierten Ultraschallwellen gebildeter Klirrfaktor ist.

8. Vorrichtung nach einem der Ansprüche 1 bis 7, **dadurch gekennzeichnet, daß** eine Kenngröße durch die Maximalamplitude der detektierten Ultraschallwellen gebildet ist.

## Claims

1. Apparatus for ultrasonic welding, having a joint-making means which has an ultrasound generator (2) and a sonotrode (4) connected to the ultrasound generator (2) by which, at at least one joint layer (7) between parts to be connected (5, 5') of a weldment (6), ultrasonic waves having settable welding parameters can be coupled into one of the parts (5, 5', having a memory for measured data by which at least one characteristic variable for setting the welding parameters can be sensed, and having an analysing unit, connected to the memory for measured data, and a setting unit, by which units welding parameters can be set as a function of at least one characteristic variable, an ultrasound detecting unit (12, 13, 14) being provided by which components of the ultrasonic waves coupled-in which are modified due to interaction with the or each joint layer (7) can be detected, and the memory (15) for measured data being connected to the ultrasound detecting unit (12, 13, 14) and being set up to sense the curve followed over time by the component of the ultrasonic waves detected, and at least one characteristic variable characteristic of the welding process being able to be determined by the analysing unit (19) from the component of the ultrasonic waves detected, **characterised in that** the ultrasound detecting unit (12, 13, 14) is designed to process, in addition to the fundamental wave of the ultrasonic waves coupled-in, higher harmonics of the fundamental wave, and **in that** a primary characteristic variable can be derived from a weighted sum of the amplitude of the fundamental wave of the ultrasonic waves detected and at least the amplitude of a higher harmonic thereof.

2. Apparatus according to claim 1, **characterised in that** a secondary characteristic variable is formed by the minimum value of the weighted sum.

3. Apparatus according to claim 1 or 2, **characterised in that** an ultrasound detector (12) belonging to the ultrasound detecting unit is inserted, opposite the sonotrode (4), in a support piece (8) which holds the weldment (6).

4. Apparatus according to one of claims 1 to 3, **characterised in that** a memory for calibration data (23) and an adjusting unit (22) are provided, by which welding parameters can be acted on by means of a comparison of characteristic variables and calibration data.

5. Apparatus according to one of claims 1 to 4, **characterised in that** a primary characteristic variable is formed by the coefficient of transmission of the joint layer (7).

6. Apparatus according to one of claims 1 to 5, **characterised in that** a primary characteristic variable is formed by the coefficient of reflection of the joint layer (7).

7. Apparatus according to one of claims 1 to 6, **characterised in that** a primary characteristic variable is a distortion factor formed by the power of the upper harmonic component of the ultrasonic waves detected relative to the power of their fundamental wave component.

8. Apparatus according to one of claims 1 to 7, **characterised in that** a characteristic variable is formed by the maximum amplitude of the ultrasonic waves detected.

## Revendications

1. Procédé de soudage aux ultrasons comportant un dispositif de jointure, qui dispose d'un générateur d'ultrasons (2) et d'une sonotrode (4) reliées au générateur d'ultrasons (2), grâce à laquelle, dans au moins une couche de jointure (7) entre les fragments à relier (5, 5') d'un métal fondu (6), les ondes ultrasonores peuvent être injectées avec des paramètres de soudage réglables dans l'un des fragments (5, 5'), comportant également une mémoire de données de mesure grâce à laquelle au moins une grandeur caractéristique peut être enregistrée afin de régler les paramètres de soudage, et une unité d'évaluation reliée à la mémoire de données de mesure ainsi qu'à l'unité de réglage grâce auxquelles, en fonction d'au moins une grandeur caractéristique, les paramètres de soudage peuvent être réglés, moyennant quoi une unité de détection d'ultrasons (12, 13, 14) est prévue, grâce à laquelle, en raison de l'interaction avec la ou chaque couche de jointure (7), les fractions modifiées des ondes ultrasonores injectées peuvent être détectées, et la mémoire de données de mesure (15) est reliée à l'unité de détection d'ultrasons (12, 13 , 14), et est installée de manière à pouvoir détecter l'évaluation temporelle de la fraction d'ondes ultrasonores détectée, et moyennant quoi, grâce à l'unité d'évaluation (19), d'après la fraction des ondes ultrasonores détectée, au moins une grandeur caractéristique essentielle pour le procédé de soudage peut être déterminée, **caractérisé en ce que** l'unité de détection d'ultrasons (12, 13, 14) est configurée afin de traiter, outre les porteuses des ondes ultrasonores injectées, des harmoniques supérieures de la porteuse, et **en ce que** d'après une somme pondérée entre l'amplitude de la porteuse et au moins l'amplitude d'une harmonique supérieure des ondes ultrasonores détectées, on peut déduire une grandeur caractéristique primaire.

2. Dispositif selon la revendication 1, **caractérisé en ce qu'**une grandeur caractéristique secondaire est constituée par la valeur minimale de la somme pondérée.

3. Procédé selon la revendication 1 ou 2, **caractérisé en ce qu'**un détecteur d'ultrasons 12 de l'unité de détection d'ultrasons est inséré dans une pièce de maintien (8) soutenant le métal fondu (6) par rapport à la sonotrode (4).

4. Dispositif selon l'une quelconque des revendications 1 à 3, **caractérisé en ce qu'**une mémoire de données de calibrage (23) et une unité d'adaptation (22) sont prévues, grâce auxquelles, suite à une comparaison entre les grandeurs caractéristiques et les données de calibrage, les paramètres de soudage peuvent être influencés.

5. Dispositif selon l'une quelconque des revendications 1 à 4, **caractérisé en ce qu'**une grandeur caractéristique primaire est constituée par les coefficients de transmission de la couche de jointure (7).

6. Dispositif selon l'une quelconque des revendication 1 à 5, **caractérisé en ce qu'**une grandeur caractéristique primaire est constituée par les coefficients de réflexion de la couche de jointure (7).

7. Dispositif selon l'une quelconque des revendications 1 à 6, **caractérisé en ce qu'**une grandeur caractéristique primaire est un facteur de distorsion harmonique formé à partir de la puissance de la fraction d'ondes harmoniques par rapport à la puissance de la fraction d'ondes porteuses des ondes ultrasonores détectées.

8. Dispositif selon l'une quelconque des revendications 1 à 7, **caractérisé en ce qu'**une grandeur caractéristique est constituée par l'amplitude maximale des ondes ultrasonores détectées.
